# EUROPEAN PATENT SPECIFICATION

(11) **EP 1 125 998 B1**
(45) Date of publication and mention of the grant of the patent: **03.08.2005**
(21) Application number: 01103749.6
(22) Date of filing: 15.02.2001
(51) Int. Cl.: C09D 183/02, C09D 183/04, C08K 13/04, C08K 7/16

(54) **Coloring coating agent and colored bulb**
Mittel zur Färbung und gefärbte Lampe
Composition colorante et lampe colorée

(30) Priority: 18.02.2000 JP 2000041729
(43) Date of publication of application: 22.08.2001
(73) Proprietor: ICHIKOH INDUSTRIES LIMITED, Shinagawa-ku, Tokyo 141-8627 (JP)
(72) Inventor: Sagawa, Norimasa, Isehara-shi, Kanagawa-ken 259-1192 (JP); Sakai, Kazuo, Kawanishi-shi, Hyogo-ken (JP); Konishi, Hideki, Kawanishi-shi, Hyogo-ken (JP)
(74) Representative: Grünecker, Kinkeldey, Stockmair & Schwanhäusser Anwaltssozietät

(56) References cited:
- EP-A- 0 992 555
- EP-A- 1 077 471
- WO-A-00/02224
- PATENT ABSTRACTS OF JAPAN vol. 1997, no. 09, 30 September 1997 (1997-09-30) & JP 09 124976 A (KOITO MFG CO LTD;NIPPON KAKO TORYO KK), 13 May 1997 (1997-05-13)
- DATABASE WPI Section Ch, Week 197528 Derwent Publications Ltd., London, GB; Class A82, AN 1975-46690W XP002197562 & JP 49 120927 A (SAKAI CHEMICAL IND KK), 19 November 1974 (1974-11-19)

## Description

### FIELD OF THE INVENTION

The present invention relates to a coloring coating agent which can preferably be used for an incandescent lamp of lighting equipments of vehicles, and also to a colored bulb colored in umber or yellow with the coloring coating agent.

### BACKGROUND OF THE INVENTION

At front, rear, and side portions of a vehicle like an automobile, provided are lighting equipments such as a parking lamp, a side marker lamp, a turn signal lamp, to be lighted in yellowish red (orange) or umber or yellow (hereafter, referred to yellow), and such lighting equipments that can secure the safe running of vehicles by generating a yellow signal of excellent visibility for a long term through enduring the difference between high and low temperatures in a small lamp housing have been developed.

In order to emit such a colored signal, there are a method to make a transparent cover of the lamp housing colored (the incandescent lamp inside remains achromatic and transparent) and a method to use a colored bulb for the incandescent lamp keeping the transparent cover achromatic and transparent, and the latter is superior in visibility. The colored bulb is made by forming on the surface of the bulb a coating film of a coloring coating agent comprising a pigment.

Chromaticity of yellow for lighting equipments of vehicles is standardized by JIS D5500, and a coating film containing chrome pigment or colored glass containing cadmium has been conventionally utilized in order to provide the yellow that meets the standard. However, environmental issues such as waste disposal have been a significant problem.

Consequently, a red rouge pigment (red iron oxide pigment) has been investigated to use as an alternate pigment in consideration of the environment. Since the red rouge pigment changes its hue according to the size of its particles, in order to obtain the yellow chromaticity of JIS D5500 it has been recognized as necessary to use a fine dispersion type coating agent containing the pigment with a particle size (diameter) smaller than 0.1 µm (refer to Publication of Japanese Unexamined Patent Application No.10-3889, No.9-124976).

However, the smaller particle size of red rouge pigment requires more pigment to be added in view of the objective chromaticity and thermal fading resistance. Therefore, the accompanying increase in an amount of added binder may cause problems such as increase of film thickness, deterioration in thermal cracking resistance, difficulties in pigment dispersion process, instability of particle size (particle diameter), decrease in thermal resistance or temperature cycling resistance, and decrease in adhesion of a coating film. Further, as far as the required hue can be obtained, it has been required that a smallest tolerable particle size of a pigment should be about 0.1µm (100nm) in a dispersed state in view of process efficiency on dispersing process and an economical aspect.

### SUMMARY OF THE INVENTION

It is therefore an object of the present invention to provide a coloring coating agent which can decrease burden on the environment by using a red rouge pigment and can provide yellow luminescence excellent in thermal cracking resistance of the coating film and visibility for a long term. Another object of this invention is to provide a colored bulb using this coating agent.

The present inventors have found out the fact that by using a red rouge pigment with spherical particle shape and a yellow organic pigment in a prescribed ratio and by adjusting dispersibility of a mixture thereof the yellowish red standardized by JIS can be realized even when the particle size of the red rouge pigment in a coating agent is larger than or equal to 0.1µm.

According to one aspect of the present invention there is provided a coloring coating agent comprising at least a binder, a pigment, and a dispersing agent, the binder being sol formed by a partial reaction of an organic silicon compound, the pigment being a mixture comprised of a red rouge pigment and a yellow organic pigment in a ratio ranging from 1:10 to 2:1 by weight, the particle shape of the red rouge pigment being spherical and the particle size thereof being 0.1 to 0.3µm, the particle size of the yellow organic pigment being smaller than or equal to 0.3µm, and the ratio of the binder (solid portion) and the pigment being in a range of 2:1 to 2:5 by weight. Since the coloring coating agent of the present invention is thus composed using the red rouge pigment with the particle size larger than or equal to 0.1µm, a colored coating film that is excellent in film adhesion and able to produce stable yellow luminescence for a long term can be provided without causing any burden on the environment. The particle size here refers to the average particle diameter of a pigment dispersed in the coating agent.

According to another aspect of the present invention there is provided a colored bulb comprising a transparent airtight container, lead-wires disposed in the transparent airtight container, and a filament hung up on the lead-wires, in which a coating film is formed on the surface of the transparent airtight container by using a coloring coating agent according to the present invention. By using the coating agent of the present invention, a high quality colored bulb, in which neither cracking nor peeling off of the colored coating film occurs, can be obtained even when it is applied to lighting equipments of vehicles whose lamp housing is exposed to a large interior temperature difference.

### DESCRIPTION OF THE DRAWINGS

Fig.1 is a graph showing a relation between a particle size of a red rouge pigment and an amount of addition necessary to obtain an objective chromaticity.

Fig.2 is a graph showing a relation between a particle size of a red rouge pigment and the minimum thickness of a coating film to suffice an objective chromaticity and solvent resistance.

Fig.3 is a schematic diagram showing an example of a colored bulb of the present invention.

Fig.4 is a schematic diagram showing a turn signal lamp as an example to which a colored bulb of the present invention is applied.

### DETAILED DESCRIPTION OF THE INVENTION

The term "a coating agent" used in the following description always refers to "a coloring coating agent".

A coating agent of the present invention includes at least a binder, a pigment, and a dispersing agent.

The binder used in the present invention is partially reacted sol of an organic silicon compound. The partially reacted sol here is the sol which is obtained by a partial hydrolysis and polycondensation of an organic silicon compound with addition of, for example, various organic solvents, water, acids as a catalyst (hydrochloric acid, nitric acid, etc.) if necessary. Examples of the organic solvents include alcohols such as methanol, ethanol, n-propanol, i-propanol, n-butanol, and i-butanol; ketones such as acetone, methyl ethyl ketone, and methyl isobutyl ketone; esters such as ethyl acetate, and butyl acetate; ethers such as methyl cellosolve, and ethyl cellosolve; cyclic ethers such as tetrahydrofuran; aromatic hydrocarbons such as benzene, and xylene. They can be used singly or in combination.

As an organic silicon compound there is no specific limitations as far as one may have the above mentioned reactivity to solate, and any of various tetrafunctional silicon compounds, trifunctional silicon compounds, and bifunctional silicon compounds can be used. Examples thereof include tetrafunctional tetraalkoxysilane such as tetramethoxysilane, tetraethoxysilane, and tetrabutoxysilane; trifunctional alkyl- or aryl-trialkoxysilane such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, vinyltrimethoxysilane, vinyltriethoxysilane, phenyltrimethoxysilane, and phenyltriethoxysilane; bifunctional dialkyl- or diaryl-dialkoxysilane such as dimethyldimethoxysilane, dimethyldiethoxysilane, diethyldimethoxysilane, and diethyldiethoxysilane. These organic silicon compounds can be used singly or in combination. It is most preferable to use tetrafunctional silicon compound mixed with trifunctional silicon compound in a moral ratio ranging from 19:1 to 2:3.

Since, in the present invention, the sol obtained by a partial reaction of the organic silicon compound is utilized, the existing amount of organic groups in a formed coating film is relatively small, and consequently the coating film is excellent in adhesion because of being able to avoid the increase of internal stress due to thermal decomposition of the organic groups.

The pigment used in the present invention is a mixture comprised of a red rouge pigment and a yellow organic pigment in a ratio ranging from 1:10 to 2:1 by weight. When the amount of the red rouge pigment in the mixture is so excessive that the ratio falls outside of this range, preferable bulb property can not be obtained because of the decrease in light transmittance although the chromaticity standardized by JIS D5500 can be achieved, whereas when the amount of the yellow organic pigment is so excessive that the ratio falls outside of this range, thermal fading resistance of the formed coating film decreases significantly.

The particle size of the red rouge pigment is larger than or equal to 0.1µm. This is because, as described in the following, while the amount of the added pigment should be limited within a given range in view of a ratio with respect to the binder in order to secure thermal cracking resistance and solvent resistance of the formed coating film, generally the smaller particle size of a pigment requires more pigment to be added in order to achieve a prescribed objective chromaticity.

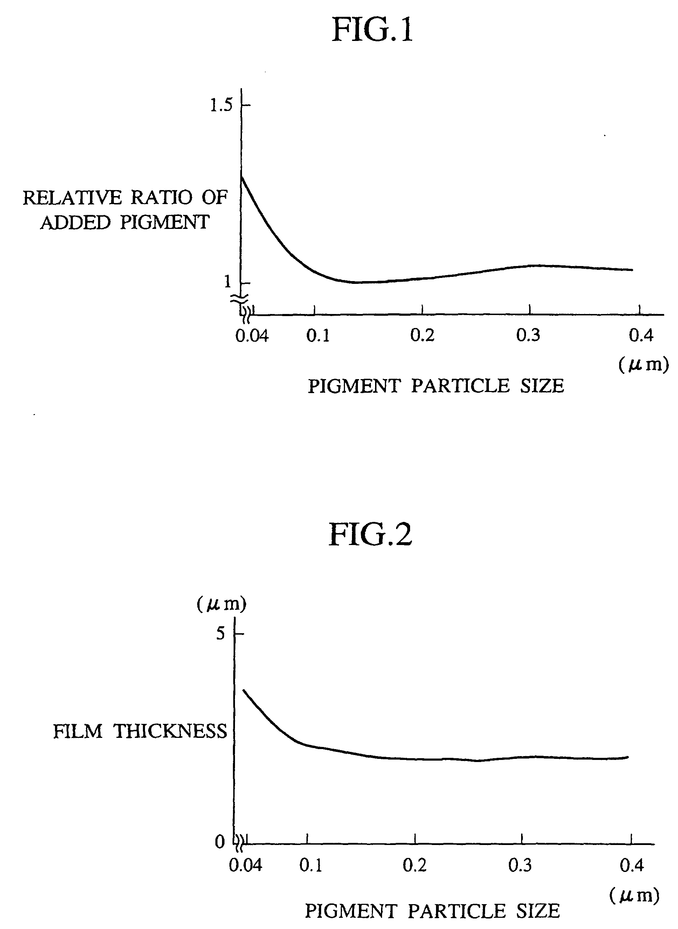

Fig. 1 is a graph showing the relation between the particle size (horizontal axis) of the red rouge pigment and the amount of added pigment (vertical axis) necessary to obtain the objective chromaticity, where the amount of added pigment on the vertical axis is indicated in terms of the ratio to the minimum amount of addition (=1, at the particle size of 0.13 µm). Fig.1 shows when the red rouge pigment with the particle size of 0.04µm is used, about 1.3 times more amount is necessary to be added in order to achieve the given objective chromaticity.

In order to achieve the objective chromaticity by adjusting the thickness of the coating film without changing the amount of added pigment, about 2 times thicker film thickness (vertical axis) of about 4.3µm is necessary as shown in Fig.2 for the pigment with the particle size (horizontal axis) of 0.04µm comparing to the case where the pigment with the particle size of 0.2 to 0.3µm is used. The film thickness in Fig.2 is shown as the minimum film thickness necessary to achieve the objective chromaticity and to satisfy solvent resistance.

However, in the about 4µm thick coating film using the red rouge pigment with the particle size of about 0.04µm, the occurrence of cracking during baking is not avoidable. The above fact is contrary to the fact that cracking during baking does not occur up to about 5µm of the film thickness when the particle size of the pigment is 0.1µm, and this is considered because the smaller the particle size becomes, the shorter a distance between the particles becomes; accordingly the binder cannot sufficiently absorb the internal stress generated during baking. The occurrence of cracking can be prevented by conducting film forming twice, but this countermeasure is not preferable in view of increase in production cost and decrease in production efficiency. On the other hand, if the amount of binder addition in the coating agent is decreased in order to achieve the objective chromaticity without causing an increase of film thickness as mentioned above, the expected result cannot be achieved because of the resultant deterioration in solvent resistance of the coating film.

Therefore, the particle size of the red rouge pigment is required to be larger than or equal to 0.1µm, and be smaller than or equal to 0.3µm, since transparency of the coating film having the objective chromaticity may decrease significantly when the particle size exceeds this size. Concretely, it has been confirmed that the light transmittance at the wave length of 700 to 780nm decreases remarkably as the particle size increases from 0.3µm to 0.4µm, but when the particle size is between 0.1 to 0.3µm, the transmittance decreases only moderately and is maintained within a practically acceptable range. According to the present invention, in the visible radiation range (380-780nm) of an emission spectrum of incandescent lamp, the red rouge pigment absorbs most of the radiation near 380 to 450nm and the yellow organic pigment absorbs the radiation near 380 to 500nm, especially near 450 to 500nm, which cannot be absorbed completely by the red rouge pigment, and therefore yellow coloring can be obtained keeping the transmittance of approximately 70% at 700 to 780nm.

The red rouge pigment is a red iron oxide pigment whose main component is α-Fe₂O₃ (hematite), and its particle shape is spherical. Owing to the spherical shape, the loss of radiation during emission can be minimized through omnidirectional light reflection. It should be noted that the primary particle size has no particular limitations, and any primary particle size may be employable in the present invention as far as the particle size at a dispersed state in the coating agent may fall within a prescribed range as mentioned above.

The yellow organic pigment is a yellow or orange pigment, for which azo compounds, condensed polycyclic compounds, etc. can be preferably utilized. Further, nitroso compounds or methine metal complexes can also be utilized. As the azo pigments, a monoazo type, a disazo type, a condensation type, a metal complex type, etc. can be employable. Examples of the condensed polycyclic pigments include perinone, isoindolinone, and quinophthalon. More specifically, Fast Yellow G, Disazo Yellow AAA, Disazo Yellow HR, Condensed Azo Yellow GR, Nickel Azo Yellow, Perinone Orange, Isoindolinone Yellow 2GLT·3RLT, Quinophthalone Yellow, Isoindoline Yellow, Nickel Nitroso Yellow, Copper Azomethine Yellow, etc. can be exemplified. These yellow organic pigments can be used singly or in combination.

The particle size of the yellow pigment is smaller than or equal to 0.3µm, since transparency of the film may decrease significantly when the particle size exceeds 0.3µm. More preferably, the particle size may be between 0.05 to 0.1µm. Further, the yellow organic pigment with a smaller particle size can also be used in view of the fact that the amount of the yellow organic pigment does not increase considerably even when the pigment with the smaller particle size is used because of its strong coloring power compared with that of the red rouge pigment (that is, the necessary increase is not as large as that required for the red rouge pigment).

The binder (solid portion) and the pigment mixture are used in a ratio ranging from 2:1 to 2:5 by weight. An excess amount of the pigment mixture to the binder beyond this range results in deterioration in adhesion, solvent resistance, film strength of the formed coating film, and also deterioration in thermal fading resistance due to evaporation of a significant amount of the yellow organic pigment. On the contrary, when the amount of the pigment mixture to the binder is under this range, the coloring may decrease depending on a coating method.

A dispersing agent is included in the coating agent of the present invention in order to obtain the above prescribed particle size of the pigment by wetting the pigment particles with the dispersing agent and finely dispersing the aggregated particles. As a dispersing agent, any of oils, resins, solvents, plasticizer, etc. can be used with no particular limitations. For examples, polyvinyl alcohol resin, ethyl cellulose, polyvinyl butyral, acrylic resin, and silane coupling agent are preferably utilized. These can be used singly or in combination.

The coating agent according to the present invention may include a thermal stabilizer, a photostabilizer, an ultraviolet absorbent, a thickener, an antifoaming agent, etc. if necessary, as an additional component. These additives can be selected from anything typically used with no particular limitations.

The coating agent of the present invention can be manufactured by mixing and dispersing each component uniformly, and adjusting the particle size of the pigment particles. For a dispersion machine, a generally used one, such as a roller mill, a ball mill, a pebble mill, an attritor, a sand mill, a mixer, and a kneader can be utilized. The machine to be used and the machine operation parameters (time, temperature, shearing force, etc.) are appropriately adjusted in order to achieve the prescribed dispersed state of the pigment.

Next, the colored bulb of the present invention, that is, the colored bulb comprising a transparent airtight container, lead-wires disposed in the transparent airtight container, and a filament hung up on the lead-wires, in which a coating film is formed on the surface of the transparent airtight container with the coating agent according to the present invention, will be described referring to the drawings.

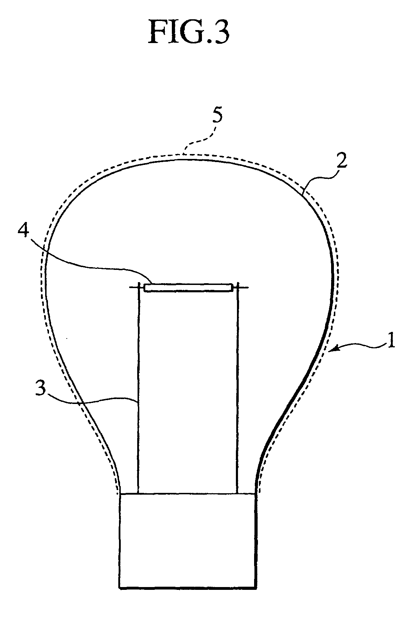

As shown in Fig. 3, a colored bulb 1 comprises a sealed transparent airtight container (a bulb) 2, lead wires 3 extending into and out of the bulb 2, and a filament 4 hung up on between the internal lead wires, and a coating film 5 is formed on the bulb surface of the incandescent lamp by applying the coating agent of the present invention.

The coating agent of the present invention is applied on the bulb surface by a known method. For example, immersion coating, air spray coating, spin coating, flow coating, dip coating, etc. are used with no particular limitations. The bulb surface here may include at least one of the inner and outer surfaces of the bulb.

The colored bulb is manufactured by baking (firing) the coating film after the coating process. Although the details of the firing process are not particularly limited, it is preferred, for example, to conduct the preliminary firing first and then glost firing, after drying process at an ambient temperature. Furthermore, the firing conditions of the preliminary firing and glost firing may preferably be about 80 to 140°C/about 2 to 15 minutes and about 150 to 350°C/about 2 to 60 minutes, respectively.

The film thickness of the formed coating film after drying may preferably be about 1 to 5µm. When the film thickness is greater than about 1 µm, sufficient coloring can be obtained, whereas when the thickness exceeds approximately 5 µm, undesirable outcomes such as cracking, clouding in the coating film may possibly occur.

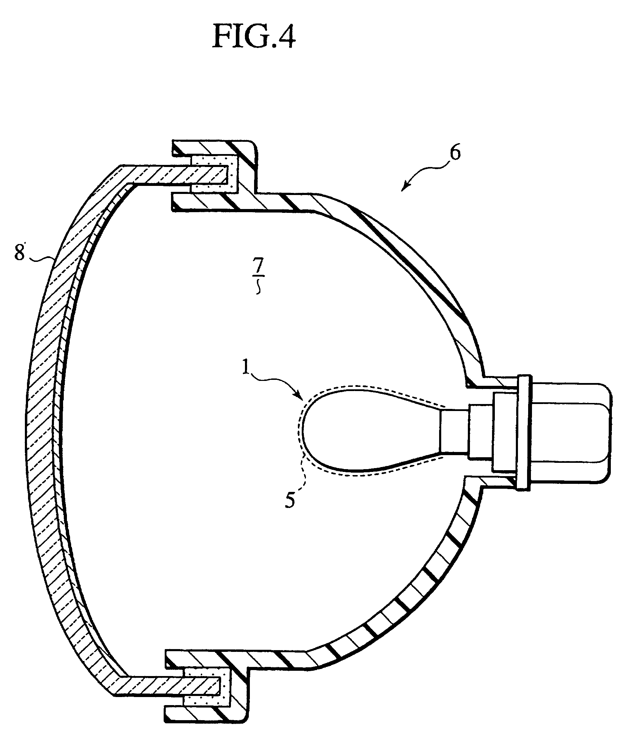

The colored bulb of the present invention, obtained as hereinbefore, is preferably used for lighting equipments of vehicles. As shown in Fig.4, for example, by disposing a colored bulb 1 on which a coating film 5 is formed, in a lamp housing 7 of a turn-signal lamp 6, a yellow signal excellent in visibility can be emitted without coloration of a front lens 8. Further, the colored coating film obtained by using the coating agent of the present invention is also excellent in thermal resistance, and durable against a sudden temperature change in the small lamp housing 7.

### EXAMPLES

In the following, "weight %" is simply described as "%".

### (1) PREPARATION OF COATING AGENTS

### 1. PIGMENT DISPERSED LIQUID

Red rouge pigment dispersed liquids (rouge dispersed liquids) A and B, and yellow organic pigment dispersed liquids (yellow dispersed liquids) A to F were prepared using each of corresponding ingredients listed below. A respective one of the pigment dispersed liquids having the particle size shown in Table 1 was obtained by a SG mill (sand grinder mill) using zirconia beads or zircon beads according to the following conditions.

### [Rouge dispersed liquid A]

### A. Composition

Rouge (Sakai Chemicals FRO series, α-Fe₂O₃) 15%
polyvinyl butyrate (Sekisui Chemicals, S-Lec BL-S) 3%
isopropyl alcohol 82%

### B. Dispersing conditions and pigment particle size

| Dipersing time (hr) | Beads media dia . (mm) | Pigment particle size (µm) |
|---|---|---|
| 72 | 0.3 | 0.04 |
| 48 | 0.3 | 0.07 |
| 48 | 0.5 | 0.1 |
| 48 | 0.6 | 0.3 |
| 48 | 0.8 | 0.4 |

The above beads with the beads media diameter (mm) of 0.3 or 0.5 are zirconia beads, and those with the diameter of 0.6 or 0.8 are zircon beads.

### [Rouge dispersed liquid B]

### A. Composition

Rouge (Sakai Chemicals FRO series, α-Fe₂O₃) 15%
acrylic resin (Johnson Polymer, Johncryl 60) 3%
isopropyl alcohol 82%

### B. Dispersing conditions and pigment particle size

The same as those for the rouge dispersed liquid A above.

### [Yellow dispersed liquid A]

### A. Composition

Bioplast Yellow 4GN (Bayer) 10%
polyvinyl butyrate (S-Lec BL-S) 12%
isopropyl alcohol 78%

### B. Dispersing conditions and pigment particle size

| Dipersing time (hr) | Beads media dia. (mm) | Pigment particle size (µm) |
|---|---|---|
| 72 | 0.3 | 0.04 |
| 48 | 0.6 | 0.2 |

The above beads with the beads media diameter (mm) of 0.3 are zirconia beads, and those with the diameter of 0.6 are zircon beads.

### [Yellow dispersed liquid B]

### A. Composition

Toner Yellow HG (Clariant) 10%
Polyvinyl butyrate (S-Lec BL-S) 10%
Isopropyl alcohol 80%

### B. Dispersing conditions and pigment particle size

The pigment was dispersed into the particle size of 0.04 µm, using the same conditions for the yellow dispersed liquid A.

### [Yellow dispersed liquid C]

### A. Composition

IRGAZIN Yellow 2GLT (CIBA Specialty Chemicals) 15%
polyvinyl butyrate (S-Lec BL-S) 15%
isopropyl alcohol 70%

### B. Dispersing conditions and pigment particle size

| Dipersing time (hr) | Beads media dia. (mm) | Pigment particle size (µm) |
|---|---|---|
| 72 | 0.3 | 0.04 |
| 48 | 0.3 | 0.06 |
| 48 | 0.5 | 0.09 |
| 48 | 0.6 | 0.2 |
| 48 | 0.8 | 0.4 |

The above beads with the beads media diameter (mm) of 0.3 are zirconia beads, and those with the diameter of 0.5, 0.6, or 0.8 are zircon beads.

### [Yellow dispersed liquid D]

### A. Composition

CROMOPHTAL Yellow 3G (CIBA Specialty Chemicals) 15%
polyvinyl butyrate (S-Lec BL-S) 15%
isopropyl alcohol 70%

### B. Dispersing conditions and pigment particle size

The same as those for the yellow dispersed liquid C above.

### [Yellow dispersed liquid E]

### A. Composition

Monolite Yellow 4RE-HD (ZENECA Ltd.) 15%
polyvinyl butyrate (S-Lec BL-S) 15%
isopropyl alcohol 70%

### B. Dispersing conditions and pigment particle size

The same as those for the yellow dispersed liquid C above, except that the one with the particle size of 0.4µm was not prepared.

### [Yellow dispersed liquid F]

### A. Composition

PALIOTOL Yellow L0960HD (BASF) 15%
polyvinyl butyrate (S-Lec BL-S) 15%
isopropyl alcohol 70%

### B. Dispersing conditions and pigment particle size

The same as those for the yellow dispersed liquid C above except that the one with the particle size of 0.4µm was not prepared.

### 2. BINDER COMPOSITION

Then, the following binder compositions A and B were prepared.

### [Binder composition A]

tetraethoxysilane (Shinetsu Chemicals, LS-2430) 17%
methyltrimethoxysilane (Shinetsu Chemicals, LS-530) 13%
isopropyl alcohol 60%
water 9.9%
nitric acid 0.1%

### [Binder composition B]

tetraethoxysilane (LS-2430) 23%
methyltrimethoxysilane (LS-530) 7%
isopropyl alcohol 60%
water 9.9%
nitric acid 0.1%

The preparation of the binder compositions was done as follows.
1) Tetraethoxysilane and methyltrimethoxysilane were mixed and stirred until the mixture became homogeneous.
2) 1/2 portion of isopropyl alcohol was added to the mixture of 1), and the mixture was stirred until it became homogeneous.
3) Water and nitric acid were added to 1/2 portion of isopropyl alcohol and the mixture was stirred until it became homogeneous.
4) The mixture of 3) was sprayed by an atomizer onto the mixture of 2) while stirring the mixture and the resulting mixture was stirred preferably in tightly sealed state until it became homogeneous, or until it became transparent when it was clouded.
5) After leaving the obtained mixture of 4) as it was, for a day in order to proceed reaction in it, it was provided for use.

By mixing a corresponding respective one of the rouge dispersed liquids, the yellow dispersed liquids, and the binder compositions obtained by the process described above in such an amount as shown in Table 1, the coating agents of Examples 1 to 21 and Comparative Examples of 1 to 16 were prepared.

**Table 1**

| Composition of Coating Agent | | | | | | | |
|---|---|---|---|---|---|---|---|
| | Rouge Dispersed Liquid PS*/µm | | Yellow Dispersed Liquid PS*/µm | | Rouge : Yellow by weigh | Binder | Binder : Pigment by weight |
| Examples | | | | | | | |
| 1 | A | 0. 1 | A | 0.04 | 3 : 4 | A | 5 : 6 |
| 2 | A | 0. 3 | A | 0.04 | 3 : 4 | A | 5 : 6 |
| 3 | B | 0. 1 | B | 0.04 | 3 : 4 | A | 5 : 6 |
| 4 | B | 0. 3 | B | 0.04 | 3 : 4 | A | 5 : 6 |
| 5 | A | 0. 3 | A | 0.2 | 3 : 4 | A | 5 : 6 |
| 6 | B | 0. 1 | C | 0.04 | 1 : 6 | B | 2 : 3 |
| 7 | B | 0. 1 | C | 0.06 | 1 : 6 | B | 2 : 3 |
| 8 | B | 0. 1 | C | 0.09 | 1 : 6 | B | 2 : 3 |
| 9 | B | 0. 1 | C | 0.2 | 1 : 6 | B | 2 : 3 |
| 10 | A | 0. 1 | D | 0.04 | 1 : 6 | B | 2 : 3 |
| 11 | A | 0. 1 | D | 0.06 | 1 : 6 | B | 2 : 3 |
| 12 | A | 0. 1 | D | 0.09 | 1 : 6 | B | 2 : 3 |
| 13 | A | 0. 1 | D | 0.2 | 1 : 6 | B | 2 : 3 |
| 14 | B | 0. 1 | E | 0.04 | 1 : 6 | B | 2 : 3 |
| 15 | B | 0. 1 | E | 0.06 | 1 : 6 | B | 2 : 3 |
| 16 | B | 0. 1 | E | 0.09 | 1 : 6 | B | 2 : 3 |
| 17 | B | 0. 1 | E | 0.2 | 1 : 6 | B | 2 : 3 |
| 18 | B | 0. 1 | F | 0.04 | 1 : 6 | B | 2 : 3 |
| 19 | B | 0. 1 | F | 0.06 | 1 : 6 | B | 2 : 3 |
| 20 | B | 0. 1 | F | 0.09 | 1 : 6 | B | 2 : 3 |
| 21 | B | 0. 1 | F | 0.2 | 1 : 6 | B | 2 : 3 |

| Comparative Examples | | | | | | | |
|---|---|---|---|---|---|---|---|
| 1 | A | 0.04 | A | 0 .04 | 1 : 1 | A | 5 : 7 |
| 2 | A | 0.04 | A | 0.04 | 1 : 1 | A | 5 : 7 |
| 3 | A | 0.07 | A | 0.04 | 4 : 5 | A | 5 : 7 |
| 4 | A | 0.07 | A | 0.04 | 4 : 5 | A | 5 : 7 |
| 5 | B | 0.04 | B | 0.04 | 1 : 1 | A | 5 : 7 |
| 6 | B | 0.04 | B | 0.04 | 1 : 1 | A | 5 : 7 |
| 7 | B | 0.07 | B | 0.04 | 4 : 5 | A | 5 : 7 |
| 8 | B | 0.07 | B | 0.04 | 4 : 5 | A | 5 : 7 |
| 9 | A | 0.4 | A | 0.04 | 3 : 4 | A | 5 : 6 |
| 10 | B | 0.4 | A | 0.04 | 3 : 4 | A | 5 : 6 |
| 11 | B | 0.1 | C | 0.4 | 3 : 4 | B | 2 : 3 |
| 12 | A | 0.1 | D | 0.4 | 3 : 4 | B | 2 : 3 |
| 13 | A | 0.1 | A | 0.04 | 5 : 2 | A | 5 : 8 |
| 14 | A | 0.1 | A | 0.04 | 1 : 1 2 | A | 1 : 1 |
| 15 | A | 0.1 | A | 0.04 | 3 : 4 | A | 5 : 2 |
| 16 | A | 0.1 | A | 0.04 | 3 : 4 | A | 1 : 6 |

| | | | | | | | |
|---|---|---|---|---|---|---|---|
| * PS : Particle Size | | | | | | | |

### (2) FORMATION OF COATING FILMS

Each coating agent was applied on the surface of an uncolored bulb for a turn-signal lamp by spray coating using nitrogen gas, and a coating film was formed by preliminary firing of 120°C/5 minutes and glost firing of 300°C/20 minutes. In each of Comparative Examples 2, 4, 6, and 8, two layer coating film (mean film thickness 3 to 5 µm) was formed by two time coating, and in each of the other Comparative Examples and the whole Examples one layer coating film (mean film thickness 2 to 3 µm) was formed by one time coating.

### (3) PROPERTY OF COATING FILMS

Solvent resistance, transmittance, initial adhesion, chromaticity, thermal cracking resistance, and thermal fading resistance of the coating film obtained as described above were evaluated respectively as follows.

### [Solvent resistance]

The coating film was rubbed with a tissue paper that absorbed a mixed solution of n-heptane 70% and toluene 30%. The results were evaluated according to the following criteria.
- G :: no color staining on the tissue paper and no appearancechange of the test pieces
- NG :: color staining on the tissue paper and/or appearance change (clouding, etc.) of the test pieces

### [Transmittance]

Transmittance at 700nm was measured by using a spectrophotometer. The results were evaluated according to the following criteria.
- G :: transmittance is greater than or equal to 70%
- NG :: transmittance is under 70%

### [Initial adhesion of the coating film]

The film surface was cut grid-likely with a cutter knife, and a cellophane tape was stuck on the film surface. After peeling off the tape promptly, the occurrence of coming off of the film grids was visually evaluated according to the following criteria.
- G :: no coming off
- NG :: coming off occurred in at least one grid

### [Chromaticity]

According to Chromaticity Test (yellowish orange) of JIS D5500, chromaticity was evaluated by spectrophotometric colorimetry in which tristimulus values XYZ were obtained.
- G :: acceptable as yellowish orange of JIS D5500
- NG :: unacceptable as yellowish orange of JIS D5500

### [Thermal cracking resistance]

A continuous lighting test of the bulb in the lighting equipment of vehicle as shown in Fig.4 was conducted for 800 hours using in total 10 test pieces for each example. The existence of cracking or coming off on the film surface was checked visually every 200 hours, and the number of samples in which cracking or peeling off occurred was counted.

### [Thermal fading resistance]

After the continuous lighting test of the bulbs for 800 hours as described above, Chromaticity Test of JIS D5500 was carried out every 200 hours to count the number of unacceptable samples.

Tests of solvent resistance, transmittance, initial adhesion, and chromaticity of the coating films were ranked as the first order evaluation (initial property test), and those of thermal cracking resistance and thermal fading resistance were ranked as the second order evaluation (endurance test), and the coating films which had passed the first order evaluation were subjected to the second order evaluation.

The results of the above evaluations are shown in Table 2 and Table 3.

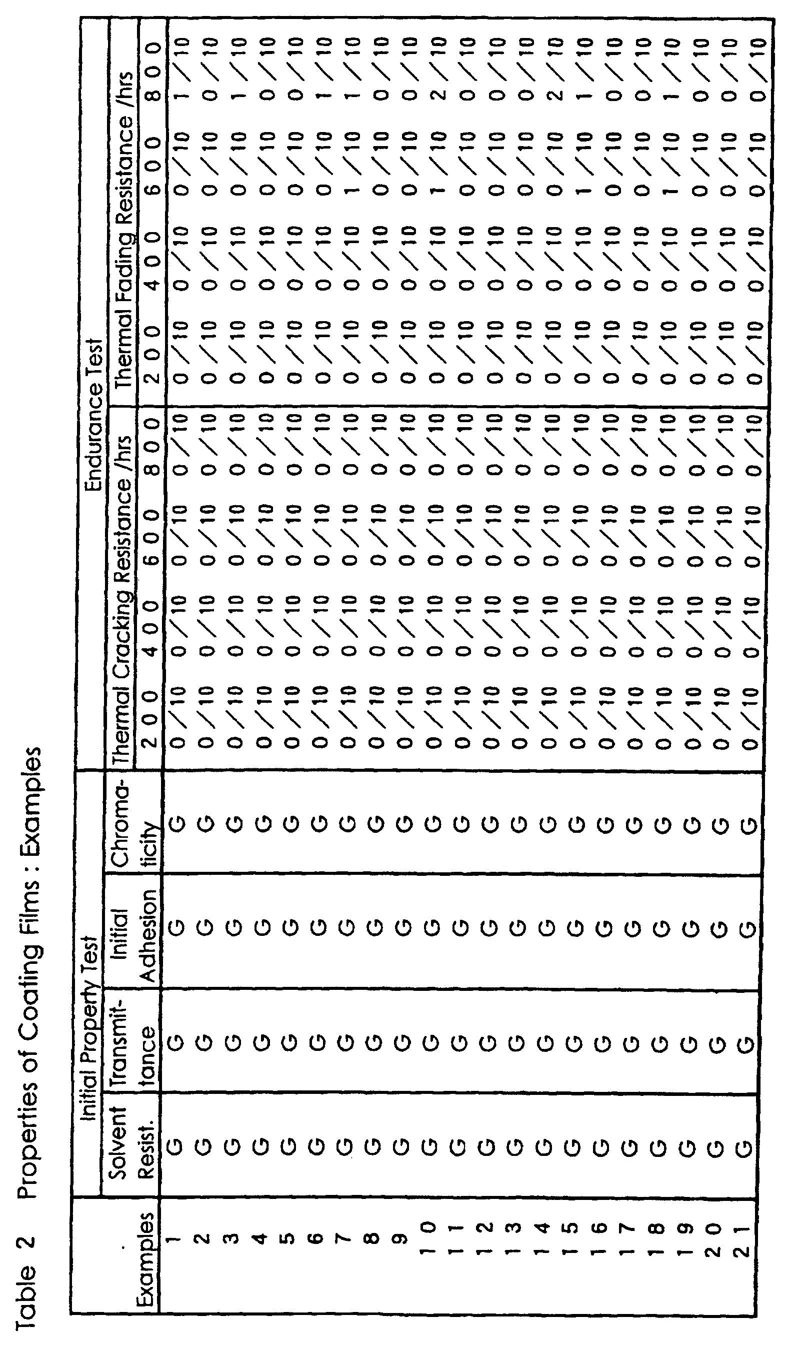

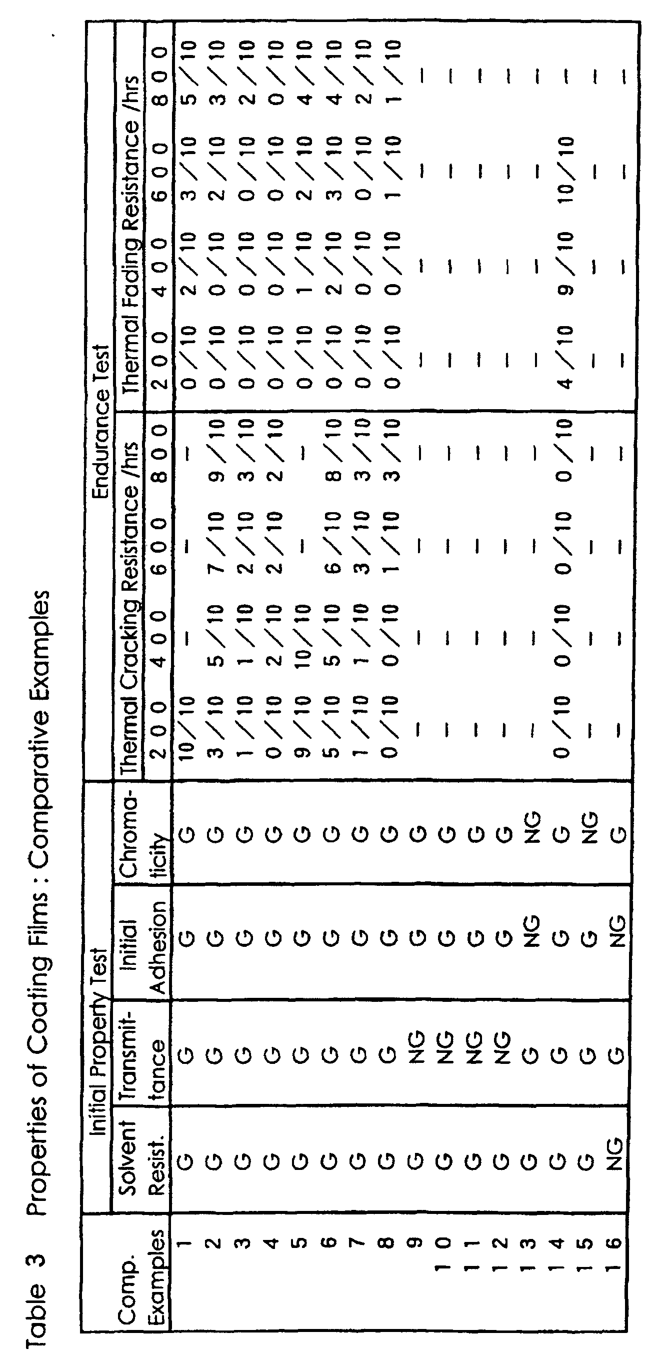

As shown in Table 2, in Examples 1 to 21 using the coating agents of the present invention, the obtained colored coating films were excellent in all of the above properties, and sufficient endurance was also proved after continuous lighting test of the bulbs.

On the contrary, as shown in Table 3, in Comparative Examples 1 to 8 in which the red rouge pigments with the particle size smaller than 0.1µm were used, deterioration in thermal cracking resistance and thermal fading resistance was observed. From Comparative Examples 2, 4, 6, and 8 it was shown that the property was not improved even by forming the two layer coating film by two time coating. Further, it was shown that both the coating agents of the red rouge pigment with the particle size of 0.4µm in Comparative Examples 9 and 10, and of the yellow organic pigment with the particle size of 0.4µm in Comparative Examples 11 and 12 were not suitable for use because of insufficient light emission due to decrease in transmittance of the coating films. Since these samples failed in the first order evaluation, they were not subjected to the second order evaluation (Comparative Examples 13, 15, and 16 were in the same situation).

Further, in Comparative Example 13 in which the amount of the yellow organic pigment to that of the red rouge pigment was too small, it was observed that chromaticity was located only in the lower region of chromaticity diagram resulting in a small area of applicable chromaticity. In Comparative Example 14 in which the amount of the yellow organic pigment to that of the red rouge pigment was too large, endurance against heat and light (thermal fading resistance) was observed to be insufficient. In Comparative Example 15 in which the amount of the pigment to that of the binder was too small, chromaticity of the coating film was insufficient. In Comparative Example 16 in which the amount of the pigment to that of the binder was too large, degradation in solvent resistance and discoloration caused by heat was observed because of the lack of fixation of the pigment.

## Claims

1. A coloring coating agent comprising at least a binder, a pigment, and a dispersing agent, wherein the binder is sol obtained by a partial reaction of an organic silicon compound, the pigment is a mixture comprised of a red rouge pigment and a yellow organic pigment in a ratio ranging from 1:10 to 2:1 by weight, the red rouge pigment has a spherical particle shape and a particle size of 0.1 to 0.3µm, the yellow organic pigment has a particle size smaller than or equal to 0.3µm, and the binder (solid portion) and the pigment are mixed in a ratio ranging from 2:1 to 2:5 by weight.

2. A coloring coating agent according to claim 1, wherein the prticle size of the yellow organic pigment is in the range of 0.05 to 0.1µm.

3. A colored bulb comprising a transparent airtight container, lead-wires disposed in the transparent airtight container, a filament hung up on the lead wires, wherein a coating film is formed on the surface of the transparent airtight container by using a coloring coating agent of claim 1.

4. A colored bulb according to claim 3, wherein the coating film after drying has a thickness ranging from 1 to 5 µm.

## Patentansprüche

1. Mittel zum Herstellen einer Farbbeschichtung, umfassend mindestens ein Bindemittel, ein Pigment und ein Dispergiermittel, wobei das Bindemittel ein Sol ist, hergestellt durch partielle Umsetzung einer organischen Siliciumverbindung, wobei das Pigment ein Gemisch ist, umfassend ein rotes Eisenoxidpigment und ein gelbes organisches Pigment in einem Verhältnis im Bereich von 1:10 bis 2:1, bezogen auf das Gewicht, wobei die Teilchenform des roten Eisenoxidpigments sphärisch ist und wobei die Teilchengröße des roten Eisenoxidpigments im Bereich von 0,1 bis 0,3 µm liegt, wobei die Teilchengröße des gelben organischen Pigments 0,3 µm oder weniger beträgt und wobei das Verhältnis von Bindemittel (Feststoffanteil) zu Pigment im Bereich von 2:1 bis 2:5 liegt, bezogen auf das Gewicht.

2. Mittel zum Herstellen einer Farbbeschichtung nach Anspruch 1, wobei die Teilchengröße des gelben organischen Pigments im Bereich von 0,05 bis 0,1 µm liegt.

3. Gefärbte Glühlampe, umfassend einen transparenten luftdichten Behälter, Anschlussdrähte, die in dem transparenten luftdichten Behälter angeordnet sind, und einen Glühfaden, der an den Anschlussdrähten aufgehängt ist, sowie einen Überzugsfilm an der Oberfläche des transparenten luftdichten Behälters, der unter Verwendung des Mittels zum Herstellen einer Farbbeschichtung nach Anspruch 1 hergestellt wurde.

4. Gefärbte Glühlampe nach Anspruch 3, wobei der Überzugsfilm nach dem Trocknen eine Dicke im Bereich von 1 bis 5 µm hat.

## Revendications

1. Agent de revêtement colorant comprenant au moins un liant, un pigment, et un agent dispersant, dans lequel le liant est un sol obtenu par une réaction partielle d'un composé silicié organique, le pigment est un mélange composé d'un pigment red rouge et d'un pigment organique jaune en un rapport allant de 1:10 à 2:1 en poids, le pigment red rouge a une forme de particule sphérique et une taille de particule de 0,1 à 0,3 µm, le pigment organique jaune a une taille de particule inférieure ou égale à 0,3 µm, et le liant (partie solide) et le pigment sont mélangés en un rapport allant de 2:1 à 2:5 en poids.

2. Agent de revêtement colorant selon la revendication 1, dans lequel la taille de particule du pigment organique jaune est dans la gamme de 0,05 à 0, 1 µm.

3. Ampoule colorée comprenant un réceptacle transparent étanche à l'air, des fils conducteurs disposés dans le réceptacle transparent étanche à l'air, un filament accroché sur les fils conducteurs, dans laquelle un film de revêtement est formé sur la surface du réceptacle transparent étanche à l'air en utilisant un agent de revêtement colorant selon la revendication 1.

4. Ampoule colorée selon la revendication 3, dans laquelle le film de revêtement, après séchage, a une épaisseur allant de 1 à 5 µm.
